**Europäisches Patentamt**

**European Patent Office**

**Office européen des brevets**

(11) Publication number : **0 473 524 A2**

# EUROPEAN PATENT APPLICATION

(21) Application number : **91480123.8**

(22) Date of filing : **13.08.91**

(51) Int. Cl.⁵ : **G06F 3/033**

(30) Priority : **31.08.90 US 575927**

(43) Date of publication of application :
**04.03.92 Bulletin 92/10**

(84) Designated Contracting States :
**DE FR GB**

(71) Applicant : **International Business Machines
Corporation
Old Orchard Road
Armonk, N.Y. 10504 (US)**

(72) Inventor : **Simpson, Richard D.
51 Wakefield Cres.
Agincourt, Ontario M1W 2C1 (CA)**
Inventor : **Kahl, Daryl J.
1901 Dexter Court
Flower Mound, TX 75028 (US)**
Inventor : **So, Andrew C.
175 Roxanne Cres.
Scarborough, Ontario MIV 4G8 (CA)**
Inventor : **Torres, Robert J.
6100 Meadowhill Drive
Colleyville, TX 76034 (US)**

(74) Representative : **Tubiana, Max
Compagnie IBM France Département de
Propriété Intellectuelle
F-06610 La Gaude (FR)**

(54) Graphical method of assigning a userdefined property to an object.

(57) Disclosed is a graphical method for assigning a user-defined property to a selected object. The method includes creating a stamp object that associated therewith the user-defined property and applying the stamp object to the selected object, thereby to assign the property to the object.

EP 0 473 524 A2

## Field of the Invention

The present invention relates generally to computer system user interfaces and more particularly to a computer system user interface that provides a graphical method of assigning user-defined properties to selected objects.

## Description of the Prior Art

In current user interfaces, users are provided with means for assigning user defined properties to objects. For example, users are provided with means for assigning security classifications to documents. However, the current implementations require the use of commands or menus within a menu hierarchy in order to access security options. These techniques can be difficult to understand, learn, and use.

In addition to security classifications, there are other types of properties that users can set, such as affinity or identification properties. However, in general, these techniques are inconsistent in terms of levels of functionality and user interface style. The functionality provided is limited in terms of its flexibility and applicability to objects of different types and levels. For example, security is typically set for documents and cannot be set charts or strings of text. Only limited customization of functionality is available to users.

## Summary of the Invention

In the present invention, users are provided with a graphical method of assigning a property to an object. The present invention provides a stamp that is a metaphor for a "physical rubber stamp device. The stamp displays the set of valid settings in a graphical manner. Direct manipulation techniques allow the user to imprint a property or value on a data object in either full, abbreviated, or symbolic form. The user can imprint the stamp value on objects at the file level or at the sub-file level. Additionally, users can customize the stamp to add, change, or delete stamp values.

## Brief Description of the Drawings

Figure 1 is a pictorial view of a "Desk Top" window with a stamp folder according to the present invention.

Figure 2 is a pictorial view similar to figure 1 that includes a " Stamps " window.

Figure 3 is a pictorial view similar to figure 1 including a security stamp object.

Figure 4 is a pictorial view similar to figure 3 including a context menu display.

Figure 5 is a pictorial view similar to figure 3 including an "Entries" window.

Figure 6 is a pictorial view similar to figure 5 in which the security stamp has been applied to an object in the "Entries" window.

Figure 7 is a pictorial view of a "Miscellaneous" stamp.

Figure 8 is a pictorial view of a "Signature" stamp.

Figure 9 is a pictorial view of a "Incrementing" stamp.

Figure 10 is a pictorial view of "Date" stamp.

Figure 11 is a flowchart showing a preferred software implementation of the present invention.

Figure 12 is a flowchart of a software implementation of the "folder" routine of figure 11.

Figure 13 is a flowchart of a software implementation of the "create" routine of figure 11.

Figure 14 is a flowchart of software implementation of the "select" routine of figure 11.

Figure 15 is a flowchart of a software implementation of the "apply" routine of figure 11.

Figure 16 is a flowchart of a software implementation of the "edit" routine of figure 11.

## Description of the Preferred Embodiment

The preferred embodiment of the present invention contemplates the use of a personal computer, such as the IBM Personal System/2* computer family. The configuration of the computer would include a keyboard, an all points addressable graphics display, and a pointing device, such as a mouse or similar instrument. The personal computer may operate independently or attached to a host or in a local area network. The preferred software of the present invention operates in an operating system with windowing capabilities such as the IBM OS/2* operating system with Presentation Manager*. All of the foregoing system requirements are conventional and well known to those skilled in the art.

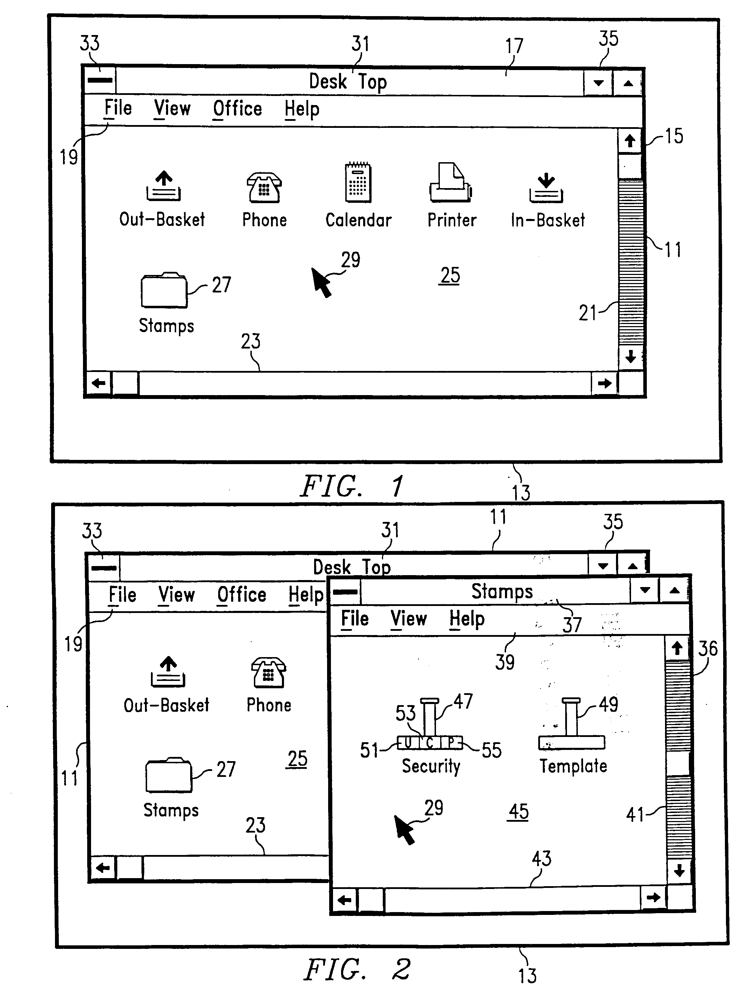

Referring now to the drawings, and first to Figure 1, a window 11 is displayed on a computer display screen 13. Window 11 includes a frame 15, which contains a title bar 17, an action bar 19, and scroll bars 21 and 23. The remainder of window 11 consists of a client area 25 which is populated with a plurality of icons, including a "Stamps" folder 27. A pointer 29 is displayed on screen 13 and it is moveable by means of a mouse (not shown).

Title bar 17 includes a window title 31, which identifies window 11 as the "Desk Top" window, a system menu icon 33, and window sizing icons 35. System menu icon 33 provides access to the actions that the user can perform on the window, such as moving and sizing. Sizing icons 35 provide a quick way for the user to maximize window 11 to the size of screen 13 or minimize it to an icon.

Action bar 19 contains the names of pull-down menus that present application actions to the user. Scroll bars 21 and 23 allow the user to view information that is not visible on the screen.

Referring now to Figure 2, there is shown in addition to window 11, a Stamps window 35. Stamps window 35 is displayed as a result of opening Stamps folder 27. Stamps window 35 includes a title bar 37, an action bar 39, scroll bars 41 and 43, and a client area 45. Client area 45 contains a security stamp icon 47 and a stamp template icon 49. Security stamp icon 47 includes three selection buttons including an "unclassified" button 51, a "confidential" button 53, and a "personal" button 55. The selection buttons allow the user to select the properties of stamp 47. Template stamp 49 is available to the user to create a stamp object with user defined properties.

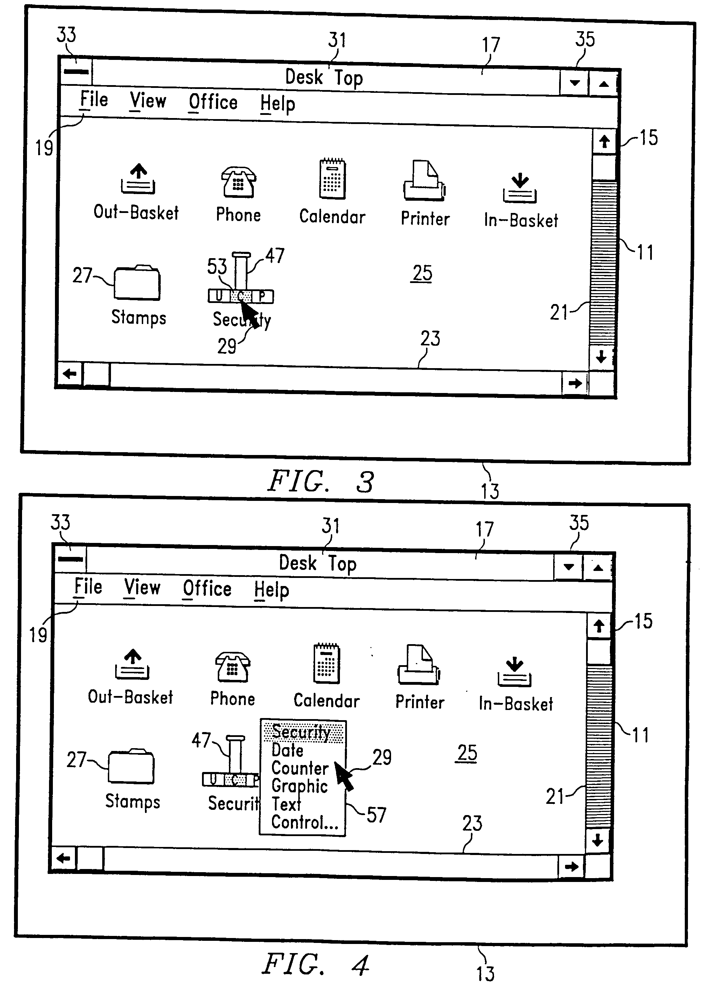

Referring now to Figure 3, Stamps window 35 has been closed and security stamp icon 47 has been placed in client area 25 of Desk Top window 11. As indicated by the shadow on confidential button 53, the user has selected the confidential feature of security stamp 47.

Referring now to Figure 4, a context menu 57 is displayed in association with security stamp object 47. Context menu 57 was opened by clicking mouse button number two on security stamp object 47. Context menu 57 allows the user to modify the properties of stamp 47. For example, the user may change stamp 47 to a date stamp or a counter stamp.

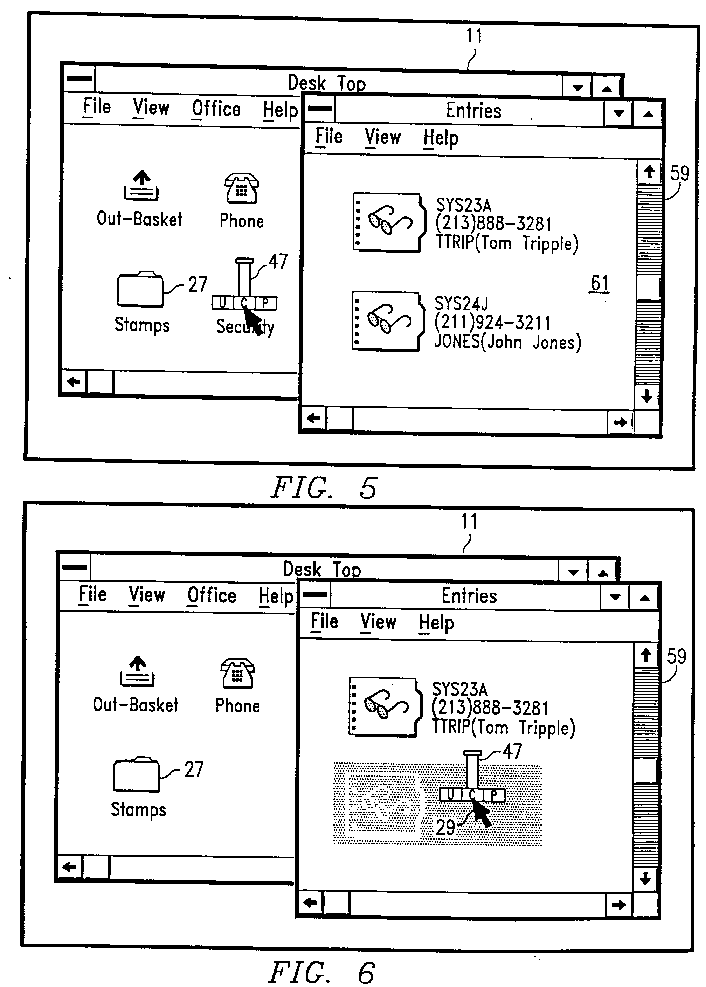

Referring now to Figure 5, there is shown in addition to Desk Top window 11, and "Entries" window 59. Entries window 59 displays in its client area 61 a listing of telephone and electronic mail information for various people. As shown in Figure 6, security stamp 47 may be dragged from desk top window 11 to entries window 59 by placing mouse pointer 29 on stamp 47 and holding down mouse button two while moving mouse pointer 29 to the position shown in Figure 6. In Figure 6, the user has imprinted the "John Jones" entry by clicking mouse button one while continuing to hold down button two. This action has made the "John Jones" entry confidential and has masked or hidden the information.

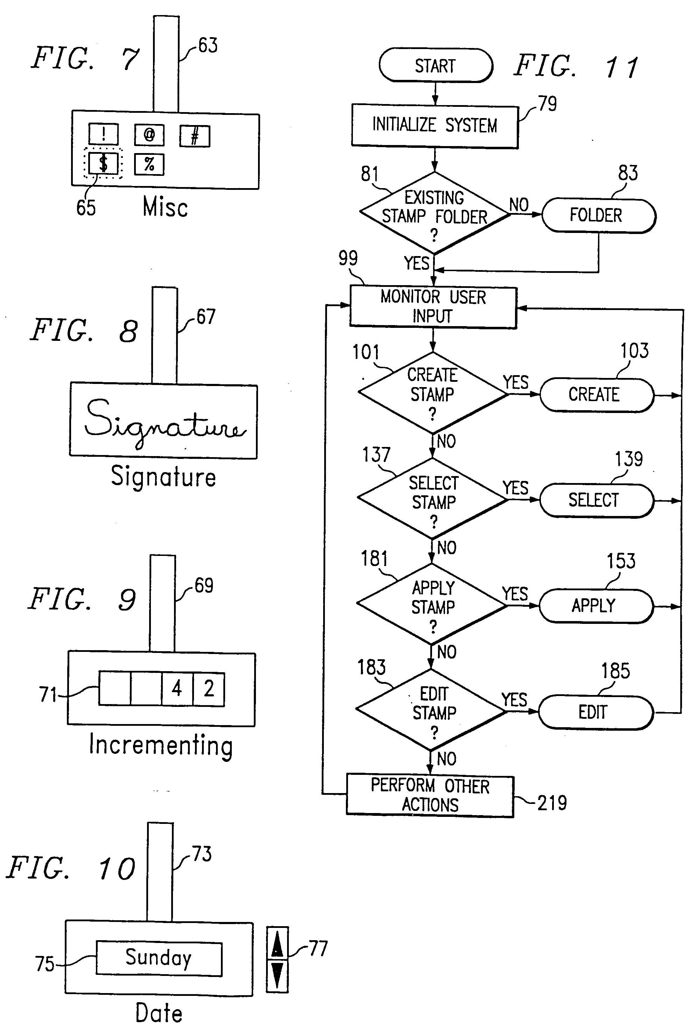

In general, stamp objects can be of many types. Referring to Figures 7 - 10, there are shown examples of stamp objects that may be created and used in addition to "the security stamp of figures 2 - 6. In Figure 7, there is shown a miscellaneous stamp object 63. Miscellaneous stamp object 63 has plurality of selection buttons including a dollar sign selection button 65. Miscellaneous stamp 63 may be used to imprint various symbols within documents and other objects.

In Figure 8, there is shown a signature stamp 67. Signature stamp 67 is an example of a graphic stamp that may be used to imprint a graphical representation of a user's signature. Those skilled in the art will recognize that a variety of graphics may be placed on a graphic stamp, such as signature stamp 67, in order to place graphics throughout documents and objects.

In Figure 9, there is shown an incrementing stamp 69. Incrementing stamp 69 is analogous to a mechanical indexing stamp that may be used to apply sequential numbers to documents. Incrementing stamp 69 includes a view window 71 that displays the current number value for the stamp. Incrementing stamp 69 may be used to apply sequential numbers to selected object or items.

Referring to Figure 10, there is shown a date stamp 73. Date stamp 73 includes a view window 75 that displays the date at which the stamp is currently set. The date may be changed by means of a spin button 77.

From the foregoing, it will be seen that the range of stamps is limited only by the imagination of the user. In addition to stamps such as the foregoing, users can create text stamps which are adapted to imprint text. With the present invention, the user may create virtually any stamp object that he or she desires.

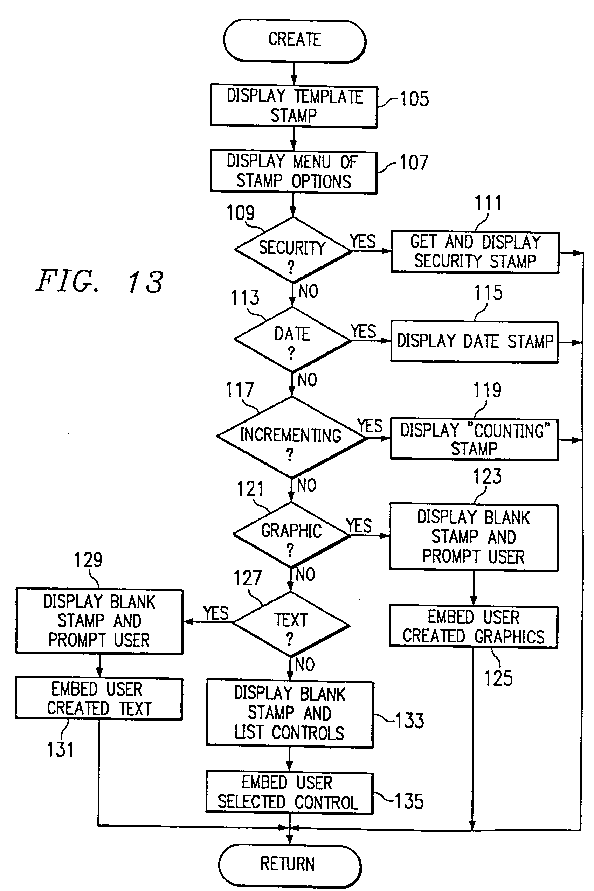

Referring now to Figure 11, there is shown a flowchart of a preferred software implementation of the present invention. After the system has been initialized at block 79, the system tests at decision block 81 whether or not there is an existing stamp folder. If there is not, then the system, at block 83, executes the "folder" routine.

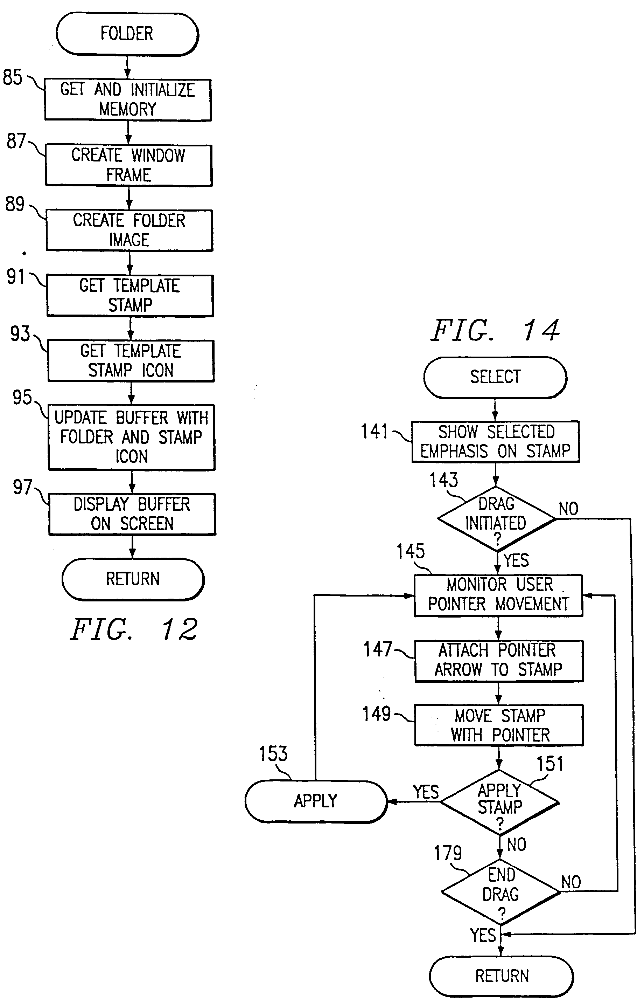

Referring to Figure 12, there is shown details of a preferred implementation of the "folder" routine. At block 85, the system gets and initializes any required memory. "Then, at block 87, the system creates a window frame and, at block 89 a folder image. Then, at block 91, the system gets the template stamp object, and at block 93, the template stamp icon. Then, the buffer is updated with the folder and stamp icon at block 95 and the buffer is displayed on the screen at block 97. Then, the system returns to monitor input at block 99 of Figure 11.

If, at decision block 101, the user desires to create a stamp, the system executes the "create" routine at block 103. Referring to Figure 13, there is shown details of a preferred software implementation of the create routine. The system displays the template stamp at block 105 and a menu of stamp options at block 107. The menu of stamp options is similar to context menu 57 in Figure 4. The menu presents the user with a list of choices. If at decision block 109 the user chooses the security stamp option, then, at block 111, the system gets and displays the security stamp. If, at decision block 113, the user chooses the date stamp option, the system displays a date stamp at block 115. If, at decision block 117, the user chooses the incrementing stamp option, the system displays at block 119 an incrementing stamp of the type shown in Figure 9.

If, at decision block 121, the user chooses the graphic option, the system, at block 123 displays a blank stamp and prompts the user to supply the desired graphic figure. Then, at block 125, the user supplied graphic is imbedded in the stamp object. If, at decision block 127, the user chooses the "text" option, then the system, at block 129, displays a blank stamp and prompts the user to supply the desired text, which is imbedded in the stamp at block 131. The final option, if the user chooses none of the foregoing options, is the control option. The system displays, at block 133 a blank stamp and a list of controls. At block 135, the system imbeds in the stamp the control selected by the user. After the stamp has been created, the system returns to block 99 in Figure 11 to continue to monitor user input.

After the desired stamps have been created, if the user desires, at decision block 137, to select the stamp, the "system performs the "select" routine at block 139. Details of a preferred implementation of the "select" routine are shown in Figure 14. When the stamp is selected, the system at block 141 shows selected emphasis on the stamp. Selected emphasis may consist of highlighting. At decision block 143, the system tests whether or not drag is initiated. Drag is initiated by depressing mouse button number two. If drag is initiated, the system monitors user pointer movement at block 145. The pointer is attached to the stamp at block 147 and the stamp is moved with the pointer at block 149. If, at decision block 151, the user applies the stamp, them the system executes the "apply" routine at block 153. The user applies the stamp by clicking mouse button one.

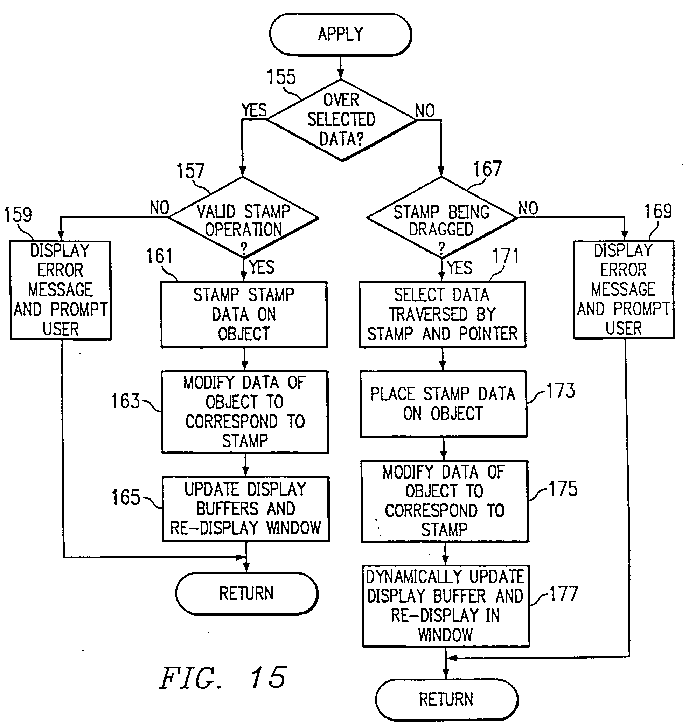

Referring to Figure 15, there is shown details of the "apply" routine. If, at decision block 155, the stamp is over selected data, the system tests, at decision block 157, whether the stamp operation is valid. If not, the system displays an error message and prompt to the user at block 159 and returns to monitor user pointer movement at block 145 in Figure 14. If the stamp operation is valid, then, at block 161, the stamp data is applied to the object and, at block 163, the data of the object is modified to correspond to the stamp. Then, at block 165, the display buffers are updated and the window is re-displayed and the system returns to monitor user pointer movement at block 145 of Figure 14.

If, at decision block 155, the stamp is not over selected data, then the system tests, at decision block 167, whether or not the stamp is being dragged. If it is not, then the system displays an error message and a user prompt at block 169 and returns to monitor user pointer movement at block 145 of Figure 14. If the stamp is being dragged then the system at block 171 selects the data traversed by the stamp and pointer and, at block 173 places the stamp data on the selected object or objects. Then, at block 175, the data of the object is modified to correspond to the stamp and, at block 177, the display buffer is dynamically updated and the window is re-displayed. Then, the system returns to monitor the user pointer movement at block 145 of Figure 14. Referring again to Figure 14, if, at decision block 151, the user does not apply the stamp, the system continues to monitor pointer movement until the end of drag occurs at decision block 179. End of drag occurs when the user releases mouse button number two, whereupon the system returns to monitor user input at block 99 of Figure 11.

Referring again to Figure 11, if, at decision block 181, the user applies the stamp to selected data, then the system executes the "apply" routine at block 153. The apply routine is shown and described in Figure 15.

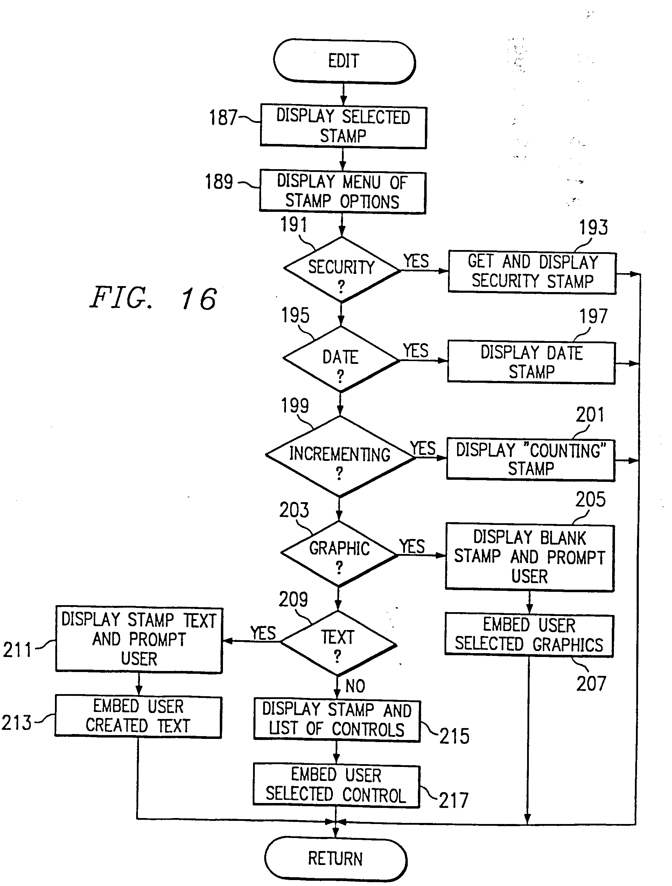

If, at decision block 183, the user desires to edit the stamp, then, the system performs the edit routine at block 185. A preferred implementation of the edit routine is shown in Figure 16. The edit routine allows the user to change the character of a selected stamp. The selected stamp is displayed at block 187 and the menu of stamp options is displayed at block 189. If the user desires to create a security stamp, at decision block 191, the system gets and displays the security stamp at block 193. If the user desires to create a date stamp at decision block 195, the system displays a date stamp at block 197. If the user desires an incrementing stamp, at decision block 199, the system displays a counting stamp at block 201. If the user desires a graphics stamp at decision block 203, the system displays a blank stamp and prompts the user for input at block 205 and imbeds the user created graphics at block 207. If, at decision block 209, the user desires to modify a text stamp, the system displays the stamp text and prompts the user for input at block 211. The system imbeds in the stamp the user text at block 213. If the user desires to change the controls, the system at block 215 displays the stamp and a list of controls and, block 217, imbeds the user-selected control in the stamp. After the user has completed editing of the stamp, the system returns to block 199 of Figure 11 to continue monitoring user input. As shown generally at block 219, the system may perform other actions.

From the foregoing, it may be seen that the present invention offers features and benefits that are not present in the prior art. The present invention offers a technique "that is analogous to the physical metaphor of rubber stamps. It uses graphical and interactive techniques for ease of learning and direct manipulation techniques for ease of use. It provides a single technique that is valid across multiple uses, objects, and levels of detail.

While the invention has been particularly shown and described with a reference to a preferred embodiment, those skilled in the art will understand that various changes in form and detail may be made without departing from the spirit and scope of the invention. For example, certain features of the invention may be used independently of other features.

**Claims**

1. In a computer system, a graphical method of assigning a user-defined property to a selected object, which comprises the steps of:

   creating a stamp object, said stamp object having associated therewith said user-defined property; and,

   applying said stamp object to said selected object.

2. The method as claimed in claim 1, wherein said step of creating said stamp object includes the steps of:

   displaying a template stamp object;

   displaying a list of properties; and,

   selecting a property from said list.

3. The method as claimed in claim 1, wherein said step of applying said stamp object to said selected object includes the step of:

   dragging said stamp object to said selected object.

4. The method as claimed in claim 1, including the step of changing the user-defined property of said stamp object.

5. The method as claimed in claim 4, wherein said step of changing the user-defined property includes the steps of:

   displaying said stamp object;

   displaying a list of properties;

   selecting a property from said list; and,

   associating the selected property with said stamp object.

6. A method of providing a computer system user with a graphical method of assigning a user-defined property to a selected object, which comprises the steps of:

   providing means for creating a stamp object, said object having associated therewith said user-defined property; and,

   providing means for applying said stamp object to said selected object.

FIG. 1

FIG. 2

FIG. 3

FIG. 4

*FIG. 5*

*FIG. 6*

FIG. 7

*63*

| ! | @ | # |
|---|---|---|
| $ | % | |

*65*

Misc

FIG. 8

*67*

*Signature*

Signature

FIG. 9

*69*

| | | 4 | 2 |
|---|---|---|---|

*71*

Incrementing

FIG. 10

*73*

| Sunday |
|---|

*75*

▲
▼

*77*

Date

FIG. 11

START

INITIALIZE SYSTEM ~79

EXISTING STAMP FOLDER ? *81* —NO→ FOLDER *83*

YES *99*

MONITOR USER INPUT

CREATE STAMP ? *101* —YES→ CREATE *103*

NO

SELECT STAMP ? *137* —YES→ SELECT *139*

NO

APPLY STAMP ? *181* —YES→ APPLY *153*

NO

EDIT STAMP ? *183* —YES→ EDIT *185*

NO

PERFORM OTHER ACTIONS ~219

FIG. 13

CREATE

DISPLAY TEMPLATE STAMP ~105

DISPLAY MENU OF STAMP OPTIONS ~107

109 — SECURITY ? — YES → GET AND DISPLAY SECURITY STAMP (111)

NO

113 — DATE ? — YES → DISPLAY DATE STAMP (115)

NO

117 — INCREMENTING ? — YES → DISPLAY "COUNTING" STAMP (119)

NO

121 — GRAPHIC ? — YES → DISPLAY BLANK STAMP AND PROMPT USER (123)

NO

127 — TEXT ? — YES → DISPLAY BLANK STAMP AND PROMPT USER (129)

EMBED USER CREATED TEXT (131)

EMBED USER CREATED GRAPHICS (125)

NO

DISPLAY BLANK STAMP AND LIST CONTROLS ~133

EMBED USER SELECTED CONTROL ~135

RETURN

10

FOLDER

85 — GET AND INITIALIZE MEMORY

87 — CREATE WINDOW FRAME

89 — CREATE FOLDER IMAGE

91 — GET TEMPLATE STAMP

93 — GET TEMPLATE STAMP ICON

95 — UPDATE BUFFER WITH FOLDER AND STAMP ICON

97 — DISPLAY BUFFER ON SCREEN

RETURN

*FIG. 12*

*FIG. 14*

SELECT

141 — SHOW SELECTED EMPHASIS ON STAMP

143 DRAG INITIATED ? — NO

YES

145 — MONITOR USER POINTER MOVEMENT

147 — ATTACH POINTER ARROW TO STAMP

149 — MOVE STAMP WITH POINTER

153 APPLY ← YES — 151 APPLY STAMP ?

NO

179 END DRAG ? — NO

YES

RETURN

APPLY

155 — OVER SELECTED DATA?

YES

NO

157 — VALID STAMP OPERATION ?

NO

159 — DISPLAY ERROR MESSAGE AND PROMPT USER

161 — STAMP STAMP DATA ON OBJECT

YES

163 — MODIFY DATA OF OBJECT TO CORRESPOND TO STAMP

165 — UPDATE DISPLAY BUFFERS AND RE-DISPLAY WINDOW

RETURN

167 — STAMP BEING DRAGGED ?

NO

169 — DISPLAY ERROR MESSAGE AND PROMPT USER

171 — SELECT DATA TRAVERSED BY STAMP AND POINTER

YES

PLACE STAMP DATA ON OBJECT — 173

MODIFY DATA OF OBJECT TO CORRESPOND TO STAMP — 175

DYNAMICALLY UPDATE DISPLAY BUFFER AND RE-DISPLAY IN WINDOW — 177

RETURN

*FIG. 15*

FIG. 16

```
                    ┌──────────────┐
                    │     EDIT     │
                    └──────┬───────┘
                           │
          187 ──┌──────────────────────┐
                │   DISPLAY SELECTED    │
                │        STAMP          │
                └──────────┬────────────┘
                           │
          189 ──┌──────────────────────┐
                │   DISPLAY MENU  OF    │
                │   STAMP  OPTIONS      │
                └──────────┬────────────┘
               191         │
                     ◇──────────────◇        YES    ┌──────────────────────┐   193
                     │   SECURITY   │ ─────────────▶ │  GET AND DISPLAY     │
                     │      ?       │                │  SECURITY STAMP      │
                     ◇──────┬───────◇                └──────────────────────┘
               195         │
                     ◇──────────────◇        YES    ┌──────────────────────┐   197
                     │     DATE     │ ─────────────▶ │   DISPLAY DATE       │
                     │      ?       │                │      STAMP           │
                     ◇──────┬───────◇                └──────────────────────┘
               199         │
                     ◇──────────────◇        YES    ┌──────────────────────┐   201
                     │  INCREMENTING │ ────────────▶ │  DISPLAY "COUNTING"  │
                     │      ?       │                │      STAMP           │
                     ◇──────┬───────◇                └──────────────────────┘
               203         │
                     ◇──────────────◇        YES    ┌──────────────────────┐   205
                     │   GRAPHIC    │ ─────────────▶ │  DISPLAY BLANK       │
                     │      ?       │                │  STAMP AND PROMPT    │
                     ◇──────┬───────◇                │      USER            │
                           │                         └──────────┬───────────┘
   ┌──────────────────┐ 209│                                    │
   │ DISPLAY STAMP TEXT│  ◇──────────────◇                ┌──────────────────────┐
   │  AND PROMPT       │◀─┤     TEXT     │                │   EMBED USER         │
   │     USER          │YES│      ?       │                │  SELECTED GRAPHICS   │
   └────────┬──────────┘  ◇──────┬───────◇                └──────────────────────┘ 207
   211      │                    │ NO
   ┌──────────────────┐  ┌──────────────────────┐
   │   EMBED USER      │  │  DISPLAY STAMP AND   │
   │  CREATED TEXT     │  │  LIST OF CONTROLS    │  215
   └────────┬──────────┘  └──────────┬───────────┘
   213      │                        │
            │             ┌──────────────────────┐
            │             │   EMBED USER         │  217
            │             │  SELECTED CONTROL    │
            │             └──────────┬───────────┘
            │                        │
            └────────────────────────┤
                           ┌─────────┴────────┐
                           │     RETURN       │
                           └──────────────────┘
```